# EUROPÄISCHE PATENTSCHRIFT

(11) **EP 2 347 299 B1**
(45) Veröffentlichungstag und Bekanntmachung des Hinweises auf die Patenterteilung: **30.05.2018**
(21) Anmeldenummer: 09783091.3
(22) Anmeldetag: 16.09.2009
(51) Int. Cl.: G02B 27/01, G02B 26/08

(54) **MIKROMECHANISCHES BAUTEIL UND VERFAHREN ZUM BETREIBEN EINES MIKROMECHANISCHEN BAUTEILS**
MICROMECHANICAL COMPONENT AND A METHOD FOR OPERATING A MICROMECHANICAL COMPONENT
COMPOSANT MICROMÉCANIQUE, ET PROCÉDÉ POUR MANIER UN COMPOSANT MICROMÉCANIQUE

(30) Priorität: 03.11.2008 DE 102008043416
(43) Veröffentlichungstag der Anmeldung: 27.07.2011
(73) Patentinhaber: Robert Bosch GmbH, 70442 Stuttgart (DE)
(72) Erfinder: PINTER, Stefan, 72764 Reutlingen (DE); MUCHOW, Joerg, 72764 Reutlingen (DE); FRITZ, Joachim, 72770 Reutlingen (DE); FRIESE, Christoph, 72764 Reutlingen (DE)
(86) Internationale Anmeldenummer: PCT/EP2009/062017
(87) Internationale Veröffentlichungsnummer: WO 2010/060664

(56) Entgegenhaltungen:
- WO-A1-00/67065
- US-A1- 2002 075 553
- US-A1- 2007 153 351
- US-B1- 6 175 451

## Beschreibung

Die Erfindung betrifft ein mikromechanisches Bauteil und ein Verfahren zum Betreiben eines derartigen mikromechanischen Bauteils.

### Stand der Technik

Ein mikromechanisches Bauteil für eine optische Strahlablenkung weist häufig einen um mindestens eine Drehachse verstellbaren Spiegel auf. Beispielsweise kann der Spiegel gegenüber einem unbeweglichen Rahmen kardanisch so aufgehängt sein, dass der Spiegel um zwei zueinander senkrecht ausgerichtete Drehachsen verstellbar ist. Ein mikromechanisches Bauteil mit einem um zwei Drehachsen verstellbaren Spiegel wird beispielsweise zum Abrastern einer Fläche mit einem Lichtstrahl in einem Projektor oder in einem Scanner eingesetzt. Dabei ist es vorteilhaft, wenn während des Betriebs des Projektors oder des Scanners eine Information über eine aktuelle Stellung des Spiegels gegenüber dem Rahmen um die beiden Drehachsen ermittelbar ist. Somit ist überprüfbar, ob die aktuelle Stellung des Spiegels einer gewünschten Spiegelstellung entspricht.

Eine aus dem Stand der Technik bekannte erste Möglichkeit zum Ermitteln einer aktuellen Stellung des Spiegels gegenüber dem Rahmen beruht auf einem Anordnen von piezoresistiven Elementen an den Torsionsfedern, über welche der Spiegel mit dem Rahmen verbunden ist. Die piezoresisitiven Elemente können beispielsweise als Wheatstone-Brücken ausgebildet sein. Bei einem Verdrehen der Torsionsfedern entstehen mechanische Spannungen, durch welche die elektrischen Widerstände der piezoresistiven Elemente verändert werden. Über ein Auswerten der elektrischen Widerstände der piezoresistiven Elemente ist somit die aktuelle Stellung des Spiegels gegenüber dem Rahmen festlegbar.

Allerdings müssen zum Ermitteln der elektrischen Widerstände der piezoresistiven Elemente elektrische Zuleitungen, welche die piezoresistiven Elemente mit einer Auswerteeinrichtung verbinden, über die Torsionsfedern (bzw. auf dem Kardanring) geführt werden. Ein als Wheatstone-Brücke ausgebildetes piezoresistives Element benötigt beispielsweise vier derartige elektrische Zuleitungen. Damit die elektrischen Zuleitungen über die Torsionsfedern geführt werden können, müssen sie relativ schmal ausgebildet werden. Als Versorgung müssen relativ hohe Ströme an die Piezos zugeführt erden. Die an den Piezos erzeugten elektrischen Nutzsignale sind jedoch sehr schwach und störanfällig. Das Herstellen, Anordnen und Abschirmen der elektrischen Zuleitungen ist deshalb vergleichsweise schwierig. Zusätzlich unterliegen die elektrischen Zuleitungen aufgrund der Federverformung häufig einer mechanischen Zerrüttung. Des Weiteren beeinträchtigen die elektrischen Zuleitungen die Biege- und Torsionssteifigkeit der Torsionsfedern, was sich auf die Verstellbarkeit des Spiegels negativ auswirkt.

Bei einer aus dem Stand der Technik bekannten zweiten Möglichkeit zum Ermitteln einer aktuellen Stellung des Spiegels gegenüber dem Rahmen wird mindestens eine erste Elektrode an einem beweglichen Element, beispielsweise dem Spiegel oder einer Torsionsfeder, fest angeordnet. Abhängig von einer Verstellbewegung des beweglichen Elements verändert sich eine Kapazität zwischen der ersten Elektrode und einer gegenüber dem Rahmen fest angeordneten zweiten Elektrode. Das zur Auswertung verwendete Signal bezüglich der Kapazität zwischen den beiden Elektroden ist jedoch vergleichsweise klein und entsprechend störanfällig. Die anhand des Signals festgelegte Stellung des Spiegels ist somit häufig ungenau. Zusätzlich erfordert auch diese herkömmliche Möglichkeit zum Ermitteln der aktuellen Stellung des Spiegels eine über eine Torsionsfeder geführte elektrische Zuleitung zum Kontaktieren der ersten Elektrode. Die in dem oberen Absatz beschriebenen Nachteile treten deshalb auch bei einem Ermitteln der aktuellen Stellung des Spiegels durch Auswerten der Kapazität zwischen den beiden Elektroden auf.

Die US 6,175,451 beschreibt eine optische Apparatur, welche einen verstellbaren Spiegel aufweist, mittels welchem ein aus einer äußeren Umgebung einfallender Lichtstrahl auf eine Lichtempfangsvorrichtung abgelenkt wird. Um zu überprüfen, ob die Ist-Auslenkung des Spiegels gleich einer vorgegebenen Soll-Auslenkung ist, ist zwischen dem Spiegel und der Lichtempfangseinrichtung ein Strahlteiler angeordnet, mittels welchem ein Teil des von dem Spiegel reflektierten Lichts auf einen Positionssensor abgelenkt wird.

Die US 2002/0075553 A1 und die US 2002/0070335 A1 beschreiben eine Mikrospiegelanordnung mit einem Detektorsystem zum Ermitteln einer aktuellen Stellung der reflektierenden Fläche der Mikrospiegelanordnung. Das Detektorsystem umfasst einen Strahlteiler, welcher einen Teil des an der Mikrospiegelanordnung reflektierten Lichts auf einen Positionsdetektor richtet, und eine Kontrollschaltung zur Auswertung der von dem Positionsdetektor gelieferten Daten. Des Weiteren kann die Mikrospiegelanordnung mindestens einen an dem verstellbaren Spiegelelement angeordneten kapazitiven Sensor und/oder eine Diode, welche Licht auf eine von der reflektierenden Fläche des verstellbaren Spiegelelements weggerichtete Unterseite mit mehreren Lichtdetektoren emittiert, umfassen.

US 2007/153351 A1 offenbart einen mikrooptischen Scanner, der in der Lage ist, die Betriebsfrequenz eines Mikrospiegels zu messen, umfassend ein Substrat. Der Mikrospiegel ist einstückig mit dem Substrat ausgebildet und dreht sich, um einfallendes Licht zu scannen.

### Offenbarung der Erfindung

Die Erfindung schafft ein mikromechanisches Bauteil mit den Merkmalen des Anspruchs 1 und ein Verfahren zum Betreiben eines mikromechanischen Bauteils mit den Merkmalen des Anspruchs 4.

Die vorliegende Erfindung basiert auf der Erkenntnis, dass ein mikromechanisches Bauteil mit einem Spiegelelement in der Regel ein Lichtfenster aufweist, an dessen Grenzflächen der austretende Lichtstrahl teilweise reflektiert wird und als Reflexionsstrahl in das Innere
des mikromechanischen Bauteils abgelenkt wird. Die Auftreffposition des Reflexionsstrahls an einer Innenoberfläche des mikromechanischen Bauteils, welche als Reflexposition bezeichnet werden kann, hängt von einer aktuellen Stellung des reflektierenden Spiegelelements gegenüber dem Lichtfenster ab. Über ein Ermitteln der Reflexposition besteht somit die Möglichkeit, eine Information über die aktuelle Stellung des reflektierenden Spiegelelements gegenüber dem Lichtfenster zu ermitteln. Zusätzlich oder als Alternative kann auch die aktuelle Intensität des Lichtstrahls auf diese Weise bestimmt werden.

Die Reflexposition liegt in der Regel bei zumindest einer Stellung des Spiegelelements nicht auf dem Spiegelelement oder der mindestens einen Feder zum Verstellen des Spiegelelements. Deshalb kann mindestens ein optischer Sensor so angeordnet werden, dass er die Verstelleigenschaften des reflektierenden Spiegelelements und die Biege- und Torsionssteifigkeit der Federn nicht beeinträchtigt. Somit bietet die vorliegende Erfindung eine gegenüber dem Stand der Technik vorteilhaftere Möglichkeit zum Ermitteln der aktuellen Stellung des reflektierenden Spiegelelements und/oder der aktuellen Intensität des Lichtstrahls.

Unter einer Information bezüglich einer aktuellen Stellung des Spiegelelements gegenüber dem Lichtfenster kann eine Größe verstanden werden, welche in einem Bezug zu der Stellung des Spiegelelements gegenüber dem Lichtfenster liegt. Selbstverständlich kann diese Information auch eine Stellung und/oder ein Ausrichtungswinkel des Spiegelelements gegenüber einer anderen zu dem Lichtfenster fest angeordneten Komponente des mikromechanischen Bauteils sein.

Die festgelegte Information bezüglich der aktuellen Stellung des Spiegelelements kann für eine Selbsttestfunktion durch eine dazu ausgelegte Vergleichseinrichtung mit einer Soll-Stellung des Spiegelelements verglichen werden. Die zur Selbsttestfunktion verwendeten Komponenten sind auf einfache Weise in das mikromechanische Bauteil integrierbar. Der optische Sensor ist beispielsweise ein opto-elektronisches Element. Insbesondere kann der mindestens eine optische Sensor so angeordnet werden, dass keine elektrischen Zuleitungen über die mindestens eine Feder, mittels welcher das Spiegelelement mit einer Rahmenhalterung verbunden ist, notwendig ist. Somit besteht nicht das Risiko einer elektrischen Störung des Nutzsignals aufgrund einer an der mindestens einen Feder angeordneten elektrischen Zuleitung.

In einer vorteilhaften Ausführungsform umfasst das mikromechanische Bauteil eine Steuer- und Antriebeinrichtung, welche dazu ausgelegt ist, das Spiegelelement für ein Abrastern einer Fläche mittels eines durch das Lichtfenster transmittierten Anteils des abgelenkten Lichtstrahls um zwei Drehachsen zu verstellen, wobei die Steuer- und Antriebeinrichtung zusätzlich dazu ausgelegt ist, bei einem Empfang eines bereitgestellten Lichtstrahl-Abblocksignals das Spiegelelement so zu verstellen, dass der abgelenkte Lichtstrahl auf eine Blende des mikromechanischen Bauteils gerichtet wird. Das erfindungsgemäße mikromechanische Bauteil kann beispielsweise in einem Projektor oder in einem Scanner eingesetzt werden. Beispielsweise wird das mikromechanische Bauteil als Mikrospiegel für ein Headup-Display in einem Kraftfahrzeug, in einem Bildprojektor und/oder in einem 2-D-Scanner genutzt. Durch das Richten des abgelenkten Lichtstrahls auf die Blende kann ein "schwarzer Punkt" in einem projizierten Bild erzeugt werden, ohne dass dazu die Intensität des abgelenkten Lichtstrahls reduziert werden muss. Zusätzlich kann anhand des an der Blende reflektierten Reflexionsstrahls die Information bezüglich der aktuellen Stellung des Spiegelelements gegenüber dem Lichtfenster und/oder bezüglich der aktuellen Intensität des abgelenkten Lichtstrahls ermittelt werden.

In einer vorteilhaften Weiterbildung ist die Auswerteeinrichtung zusätzlich dazu ausgelegt, anhand eines zeitlichen Verlaufs des Sensorsignals einen Stillstand des Spiegelelements zu erkennen, und, sofern ein Stillstand des Spiegelelements für eine vorgegebene Zeitdauer erkannt wird, das Lichtstrahl-Abblocksignal an die Steuer- und Antriebeinrichtung auszugeben. Als Alternative dazu kann auch ein Abschaltsignal an eine den abgelenkten Lichtstrahl emittierende Lichtquelle ausgegeben werden. Auf diese Weise ist das Verletzungsrisiko, welches besonders hoch ist, wenn der abgelenkte Lichtstrahl für eine längere Zeitdauer einer Person ins Auge fällt, signifikant reduzierbar.

Die in den oberen Abschnitten beschriebenen Vorteile sind auch bei einem entsprechenden Verfahren zum Betreiben eines mikromechanischen Bauteils mit einem Lichtfenster und einem Spiegelelement gewährleistet.

Insbesondere kann ein vorgegebenes Bild auf eine Projektionsfläche projiziert werden, indem das Spiegelelement um zwei Drehachsen so verstellt wird, dass die Projektionsfläche mittels eines durch das Lichtfenster transmittierten Anteils des abgelenkten Lichtstrahls zumindest teilweise abgerastert wird, wobei während des Abrasterns der Projektionsfläche mindestens einmal die aktuelle Stellung des Spiegelelements ermittelt und mit einer vorgegebenen Soll-Stellung des Spiegelelements verglichen wird. Die vorliegende Erfindung ermöglicht somit eine Selbsttestfunktion bzw. eine Funktionsüberwachung während des Betriebs des mikromechanischen Bauteils.

Des Weiteren können mindestens zwei Lichtquellen nacheinander aktiviert werden, und nach einem Aktivieren einer der mindestens zwei Lichtquellen die aktuelle Intensität des abgelenkten Lichtstrahls ermittelt wird, und unter Berücksichtigung der ermittelten aktuellen Intensität ein Helligkeitssteuersignal an die zuletzt aktivierte Lichtquelle ausgegeben wird. Auf diese Weise ist eine Kalibrierung der Helligkeit der mindestens zwei Lichtquellen einfach ausführbar.

Als Ergänzung kann der Projektion des vorgegebenen Bilds die Projektionsfläche über ein Verstellen des Spiegelelements um mindestens eine der beiden Drehachsen zumindest teilweise abgerastert werden, wobei während des zumindest teilweisen Abrasterns der Projektionsfläche sichergestellt wird, dass ein von der mindestens einen emittierenden Lichtquelle emittierte Lichtstrahl nicht auf die Detektionsfläche trifft, so dass über das Ermitteln der Lichtintensität auf der Detektionsfläche zumindest eine Teil-Lichtintensität auf der Projektionsfläche festgelegt wird. Beispielsweise wird die mindestens eine emittierende Lichtquelle zuvor zeitlich deaktiviert oder die Emission von der mindestens einen emittierenden Lichtquelle wird abgeblockt. Somit ist es möglich, über das beschriebene Verfahren, oder mittels eines entsprechenden mikromechanischen Bauteils eine Lichtintensität auf der Projektionsfläche zu messen.

### Kurze Beschreibung der Zeichnungen

Weitere Merkmale und Vorteile der vorliegenden Erfindung werden nachfolgend anhand der Figuren erläutert. Es zeigen:
- Figuren 1A und B: schematische Darstellungen einer Ausführungsform des mikromechanischen Bauteils; und
- Figur 2: zwei Koordinatensysteme zum Darstellen zweier Beispiele für an dem mikromechanischen Bauteil der Figuren 1A und B abgegriffene Spannungssignale.

### Ausführungsformen der Erfindung

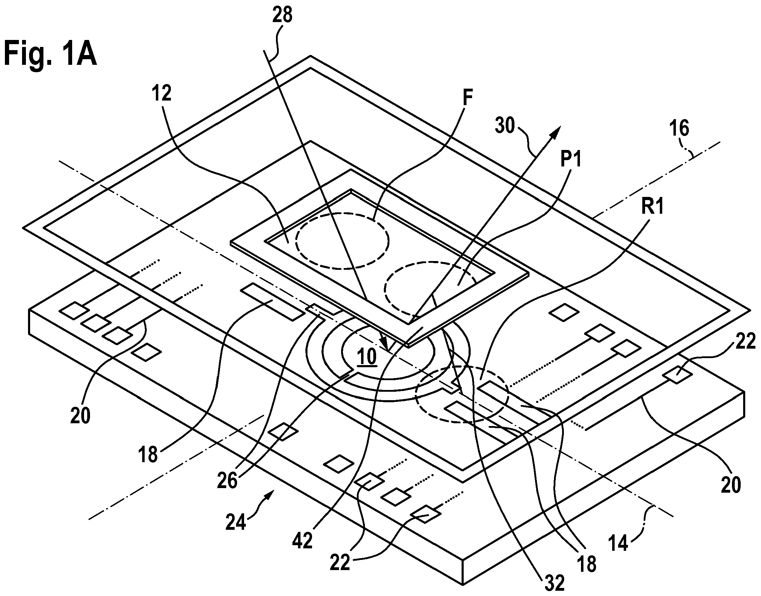

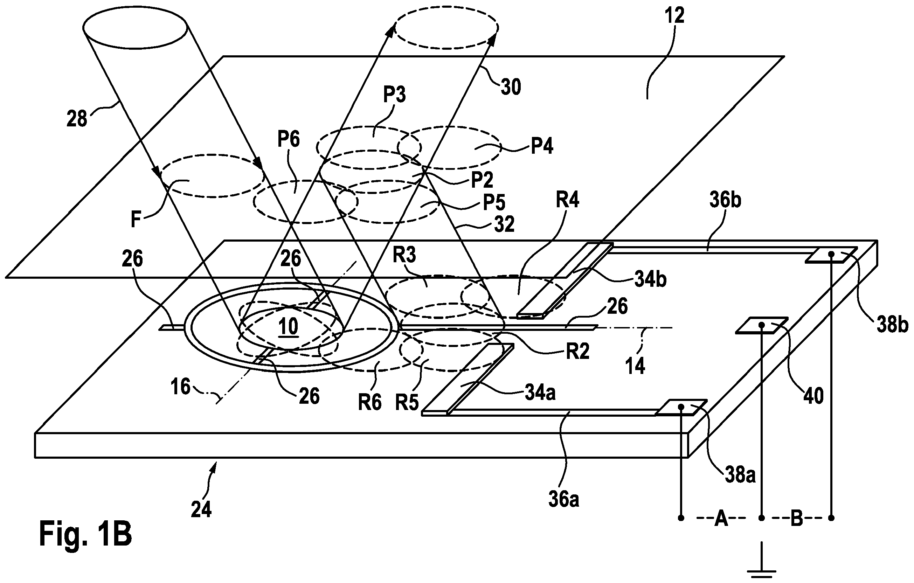

Figuren 1A und B zeigen schematische Darstellungen einer Ausführungsform des mikromechanischen Bauteils.

Das dargestellte mikromechanische Bauteil weist ein Spiegelelement 10 auf, welches gegenüber einem Lichtfenster 12 eines Gehäuses des mikromechanischen Bauteils verstellbar ist. Bei der dargestellten Ausführungsform ist das Spiegelelement 10 gegenüber dem Lichtfenster 12 um eine erste Drehachse 14 und um eine zweite Drehachse 16 verstellbar. Das Verstellen des Spiegelelements 10 um mindestens eine der beiden Drehachsen 14 und 16 kann beispielsweise mittels eines elektrostatischen und/oder eines magnetischen Antriebs erfolgen. Die beiden Drehachsen 14 und 16 sind vorzugsweise senkrecht zueinander ausgerichtet.

Die vorliegende Erfindung ist jedoch nicht auf ein um zwei Drehachsen 14 und 16 verstellbares Spiegelelement 10 beschränkt. Stattdessen kann das Spiegelelement 10 auch nur um eine Drehachse 14 oder 16 verstellbar angeordnet sein. Ebenso ist die vorliegende Erfindung nicht auf einen bestimmten Typ eines Antriebs zum Verstellen des Spiegelelements 10 eingeschränkt. Aus diesem Grund wird auf die nur in Figur 1A dargestellten Komponenten 18 bis 22 des Antriebs zum Verstellen des Spiegelelements 10 um mindestens eine der Drehachsen 14 und 16 nicht weiter eingegangen.

Das Spiegelelement 10 kann beispielsweise aus einem Chip 24 herausgeätzt werden. In diesem Fall kann bei der Herstellung des Spiegelelements 10 zusätzlich mindestens eine Feder 26 aus dem Chip 24 herausgeätzt werden, mittels welcher das Spiegelelement 10 mit dem als Rahmenhalterung fungierenden Chip 24 verbunden ist. Beispielsweise ist das Spiegelelement 10 mittels vier als Torsionsfedern ausgebildeten Federn 26 kardanisch am Chip 24 aufgehängt, wie dies in Figur 1B schematisch dargestellt ist. Dabei verlaufen je zwei Federn 26 entlang der beiden Drehachsen 14 und 16, um welche das Spiegelelement 10 verstellbar ist. Da geeignete Federn 26 zum Aufhängen eines verstellbaren Spiegelelements 10 an einem Chip 24 aus dem Stand der Technik bekannt sind, wird nicht näher darauf eingegangen.

Der besseren Übersichtlichkeit wegen ist von den verschiedenen Komponenten des Gehäuses des mikromechanischen Bauteils nur das Lichtfenster 12 in den Figuren 1A und B dargestellt. Über das Lichteinfallfenster 12 kann ein einfallender Lichtstrahl 28 in das Innere des Gehäuses des mikromechanischen Bauteils so eingekoppelt werden, dass der einfallende Lichtstrahl 28 auf das Spiegelelement 10 fällt. Das Lichtfenster 12 ist vorzugsweise aus einem Material mit einem hohen Transmissionsgrad, wie beispielsweise Glas, hergestellt. Der einfallende Lichtstrahl 28 transmittiert in dem dargestellten Beispiel der Figuren 1A und B durch eine Einkoppelfläche F an einer äußeren Grenzfläche des Lichtfensters 12. Es wird hier jedoch darauf hingewiesen, dass die vorliegende Erfindung nicht auf ein mikromechanisches Bauteil beschränkt ist, bei welchem der einfallende Lichtstrahl 28 von einer Lichtquelle außerhalb des mikromechanischen Bauteils emittiert wird. Stattdessen kann im Inneren des mikromechanischen Bauteils eine Lichtquelle zur Emission des einfallenden Lichtstrahls 28 angeordnet sein.
Der einfallende Lichtstrahl 28 wird an der reflektierend ausgebildeten Oberfläche des Spiegelelements 10 so abgelenkt, dass er als abgelenkter Lichtstrahl 30 auf das Lichtfenster 12 trifft. Vorzugsweise weist das Spiegelelement 10 dazu eine Oberfläche mit einem hohen Reflexionsgrad, beispielsweise aufgrund einer geeigneten Beschichtung, auf. Der Einfallwinkel des auf das Lichtfenster 12 auftreffenden abgelenkten Lichtstrahls 30 hängt von einer aktuellen Stellung des Spiegelelements 10 gegenüber dem Lichtfenster 12 ab. Entsprechend ändert sich der Einfallwinkel, bzw. eine Auftreffposition P1 bis P6 des abgelenkten Lichtstrahls 30 auf dem Lichtfenster 12 bei einer Drehung des Spiegelelements 10 um mindestens eine der Drehachsen 14 und 16. (Die hier dargestellten Auftreffpositionen P1 bis P6 sind lediglich Beispiele für mögliche Auftreffpositionen.)

Der auf das Lichtfenster 12 auftreffende abgelenkte Lichtstrahl 30 wird an mindestens einer der Grenzflächen des Lichtfensters 12 zumindest teilweise reflektiert. Der reflektierte Anteil des abgelenkten Lichtstrahls 30 fällt als Reflexionsstrahl 32 in das Innere des mikromechanischen Bauteils zurück. Der nicht reflektierte Anteil des abgelenkten Lichtstrahls 30 wird durch das Lichtfenster 12 transmittiert und kann zum Abrastern einer Zeile oder einer Fläche verwendet werden.

In dem dargestellten Beispiel der Figuren 1A und B ist das Lichtfenster 12 so gegenüber dem Chip 24 angeordnet, dass der Reflexionsstrahl 32 auf eine Reflexposition R1 bis R6 auf einer Oberfläche des Chips 24 auftrifft. (Entsprechend den Auftreffpositionen P1 bis P6 sind nur mögliche Beispiele für die Reflexpositionen R1 bis R6 dargestellt.) Selbstverständlich kann das Lichtfenster 12 gegenüber dem Spiegelelement 10 auch so angeordnet werden, dass der Reflexionsstrahl 32 auf einen anderen gewünschten Flächenbereich im Inneren des mikromechanischen Bauteils auftrifft.

Die Reflexposition R1 bis R6 auf dem Chip 24 ist abhängig von der Auftreffposition P1 bis P6 des abgelenkten Strahls 30 auf dem Lichteinfallfenster. Zur besseren Veranschaulichung dieser Abhängigkeit sind verschiedene Auftreffpositionen P2 bis P6 mit ihren zugehörigen Reflexpositionen R2 bis R6 auf dem Chip 24 in Figur 1B dargestellt.

Somit besteht eine Relation zwischen einer aktuellen Stellung des Spiegelelements 10 gegenüber dem Lichtfenster 12, bzw. gegenüber dem Chip 24, und der Reflexposition R1 bis R6 des Reflexionsstrahls 32 auf dem Chip 24. Man spricht dabei auch von einer Abhängigkeit der Reflexposition R1 bis R6 des Reflexionsstrahls 32 auf den Chip 24 von einer Auslenkung des Spiegelelements 10 aus seiner Ausgangsstellung. Befindet sich das Spiegelelement 10 in seiner Ausgangsstellung, in welcher das Spiegelelement 10 parallel zu der Oberfläche des Chips 24 ausgerichtet ist, so trifft der Reflexionsstrahl 32 an der Reflexposition R2 auf die Oberfläche des Chips 24. Demgegenüber entsprechen die Reflexpositionen R3 bis R6 maximalen Auslenkungen des Spiegelelements 10 um eine der beiden Drehachsen 14 und 16 in unterschiedlichen Drehrichtungen.

Durch das Anordnen mindestens eines optischen Sensors 34a oder 34b auf dem Chip 24 kann eine Information über eine aktuelle Lage der Reflexposition R1 bis R6 des Reflexionsstrahls 32 ermittelt werden. Der mindestens eine optische Sensor 34a oder 34b ist dabei vorzugsweise als lichtempfindliches elektrisches Element ausgebildet, dessen Sensorsignal abhängig von der auf der Detektionsfläche des optischen Sensors 34a oder 34b auftreffenden Lichtintensität ist. Möglich ist auch die Verwendung eines elektrooptischen Elements, dessen Signal abhängig von der Position des auftreffenden Lichtstrahls ist (PSD, Position Sensitive Device). Die Detektionsfläche ist beispielsweise die Oberfläche des optischen Sensors 34a oder 34b. Eine einfach und kostengünstig herstellbare Ausführung des mindestens einen optischen Sensors 34a oder 34b ist eine Diode mit einem pn-Übergang, welche mittels standardmäßiger Herstellungsverfahren auf dem Chip 24 herstellbar ist.

Bevorzugt ist der mindestens eine optische Sensor 34a oder 34b beabstandet von dem Spiegelelement 10 und der mindestens einen Feder 26 angeordnet. Beispielsweise ist der mindestens eine optische Sensor 34a oder 34b auf einem Festlandbereich des Chips 24 angeordnet, wodurch der mindestens eine optische Sensor 34a oder 34b elektrisch einfach zu kontaktieren ist, ohne dass eine über die mindestens eine Feder 26 geführte elektrische Leitungen 36a oder 36b zum Kontaktieren des optischen Sensors 34a oder 34b notwendig ist. Das Anbringen des mindestens einen optischen Sensors 34a oder 34b beeinträchtigt in diesem Fall nicht eine Torsions- oder Biegesteifigkeit der mindestens einen Feder 26 und die Verstellbarkeit des Spiegelelements 10.

Durch eine geeignet Anzahl, geometrische Form und Positionierung von mehreren optischen Sensoren 34a und 34b auf der Oberfläche des Chips 24 kann die aktuelle Reflexposition R1 bis R6 des Reflexionsstrahls 32 mit einer hohen Genauigkeit ermittelt werden. Da mögliche Ausführungsformen für die Geometrie, Anordnung und elektrische Verschaltung von mehreren optischen Sensoren 34a und 34b für einen Fachmann offensichtlich sind, ist die Anordnung der beiden optischen Sensoren 34a und 34b in Figur 1B nur schematisch dargestellt. Jeder der beiden optischen Sensoren 34a und 34b ist über mindestens eine elektrische Leitungen 36a oder 36b mit einem zugehörigen Kontakt 38a oder 38b verbunden. Zusätzlich ist auf der Oberfläche des Chips 24 eine Erdung 40 ausgebildet.

Zwischen dem Kontakt 38a und der Erdung 40 wird das Spannungssignal A abgegriffen. Entsprechend wird zwischen dem Kontakt 38b und der Erdung 40 das Spannungssignal B abgegriffen. Die Höhe eines Spannungssignals A oder B entspricht der Intensität des auf die Detektionsfläche des zugehörigen optischen Sensors 34a oder 34b auftreffenden Lichts. Somit lässt sich über die Spannungssignale A und B die Reflexposition R1 bis R6 des Reflexionsstrahls 32 auf der Oberfläche des Chips 24 ermitteln.

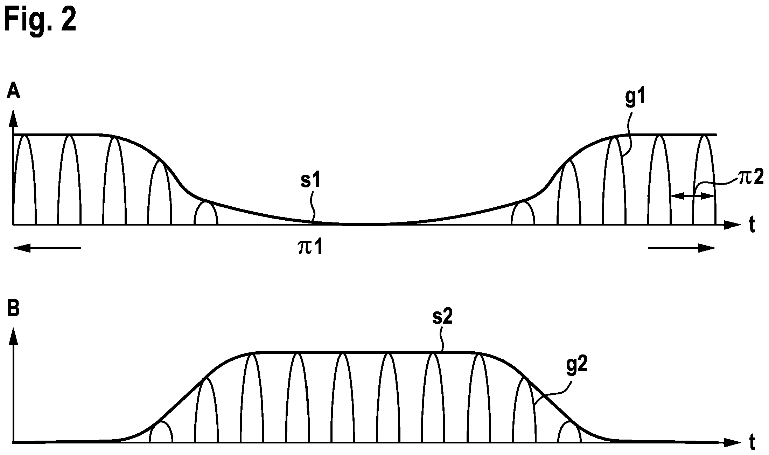

Figur 2 zeigt zwei Koordinatensysteme zum Darstellen zweier Beispiele für an dem mikromechanischen Bauteil der Figuren 1A und B abgegriffene Spannungssignale A und B. Die Abszisse der beiden Koordinatensysteme ist die Zeitachse t, wobei der wiedergegebene Zeitbereich einer Periode π1 einer Auslenkung des Spiegelelements um die erste Drehachse entspricht. Die Ordinaten der beiden Koordinatensysteme geben die abgegriffenen Spannungssignale A und B an.

In dem wiedergegebenen Betriebsmodus wird das Spiegelelement so um die beiden Drehachsen verstellt, dass das Verhältnis zwischen der Periode π1 und einer Periode π2 einer Auslenkung des Spiegelelements um die zweite Drehachse gleich 16:1 ist. Die Maxima der in die beiden Koordinatensysteme eingetragenen Graphen g1 und g2 entsprechen einer maximalen Verstellung des Spiegelelements um die zweite Drehachse. Demgegenüber geben die Einhüllenden s1 und s2 der beiden Graphen g1 und g2 eine Verstellung des Spiegelelements um die erste Drehachse an.

In einer vorteilhaften Weiterbildung einer Auswerteeinrichtung des hier beschriebenen mikromechanischen Bauteils wird für ein Ermitteln der aktuellen Reflexposition des Reflexionsstrahls auf dem Chip eine Differenz der beiden Spannungssignalen A und B ausgewertet. Da die Differenz der beiden Spannungssignale A und B gegenüber äußeren Einflüssen, wie beispielsweise einem Tageslicht, einer Helligkeit der mindestens einen Lichtquelle und/oder einer Temperatur, unempfindlich ist, lassen sich somit auf einfache Weise die Messungenauigkeit verbessern und/oder das Risiko falscher Messergebnisse reduzieren.

Die anhand der Figuren 1A und B beschriebene Ausführungsform des mikromechanischen Bauteils kann in einem Projektor eingesetzt werden. Dabei entsteht das projizierte Bild durch ein Abrastern des abgelenkten Lichtstrahls 30 über eine Fläche, wobei die Lichtintensität des einfallenden Lichtstrahls 28 gleichzeitig variiert wird. Vor der Projizierung eines Bildes kann nach einem Anschalten des mikromechanischen Bauteils eine Kalibrierung (Synchronisation) des Antriebs zum Verstellen des Spiegelelements 10 und einer (nicht skizzierten) Einrichtung für eine Lichtstrahlmodulation ausgeführt werden. Beispielsweise wird dazu bei reduzierter bzw. bei langsam zunehmender Strahlhelligkeit die projizierte Fläche für kurze Zeit komplett ausgeleuchtet, wobei gleichzeitig die Reflexposition R1 bis R6 ermittelt und ausgewertet wird. Nach einer erfolgreich ausgeführten Synchronisation kann anschließend das gewünschte Bild projiziert werden. Diese Initialisierungsprozedur nach dem Einschalten kann zugleich als Selbsttest des mikromechanischen Bauteils und der verwendeten Lichtquelle ausgeführt werden.

Der mindestens eine optische Sensor 34 kann auch dazu genutzt werden, bei einer temporär ausgeschalteten Lichtquelle und einem bewegten Spiegelelement 10 eine Helligkeitsverteilung auf der Fläche, auf welche der abgelenkte Lichtstrahl 30 für ein projiziertes Bild gerichtet werden soll, zu ermitteln. Somit ist auch die Helligkeitsverteilung auf dieser Fläche messbar und kann zur Korrektur/Regelung der Emission der Lichtquelle verwendet werden.

Zusätzlich kann das hier beschriebene mikromechanische Bauteil auch für eine Helligkeitskalibrierung von verschiedenen Lichtquellen, beispielsweise von Lichtquellen mit unterschiedlichen emittierten Wellenlängen, verwendet werden. Beispielsweise werden dazu die einzelnen Lichtquellen während der Initialisierung nacheinander eingeschaltet, wobei ihre jeweilige Intensität gemessen und bei Bedarf zueinander korrigiert wird.

Des Weiteren ist mit dem hier beschriebenen mikromechanischen Bauteil auch eine Funktionsüberprüfung des mikromechanischen Bauteils und/oder der Lichtquelle während des Betriebs möglich. Dazu ist der mindestens eine optische Sensor 34 so angeordnet, dass er den zum Projizieren des gewünschten Bildes ausgeführten Funktionsablauf nicht beeinträchtigt.

Vorzugsweise soll es auch bei einer vergleichsweise großen Anzahl von "schwarzen Bildpunkten" des projizierten Bildes möglich sein, die aktuelle Stellung des Spiegelelements 10 gegenüber dem Lichtfenster 12 zu detektiert. Dies ist realisierbar, indem an dem Lichtfenster 12 eine Blende 42, insbesondere mit einem hohen Reflexionsgrad, angebracht wird. Fällt der abgelenkte Lichtstrahl 30 auf die Blende 42, so wird er nahezu vollständig als Reflexionsstrahl 32 auf dem Chip 24 reflektiert. Mittels des von der Blende 42 abgelenkten Reflexionsstrahls 32 kann die aktuelle Stellung des Spiegelelements 10 gegenüber dem Lichtfenster 12 ermittelt werden, ohne dass in dem projizierten Bild ein wahrnehmbarer Lichtpunkt erzeugt wird.

Des Weiteren ist es wünschenswert, insbesondere bei einer extremen Auslenkung des Spiegelelements 10 die aktuelle Stellung des Spiegelelements 10 zu ermitteln. Möchte man auf eine Blende 42 an dem Lichtfenster 12 verzichten, so besteht die Möglichkeit, einen hellen Rahmen um das projizierte Bild zu setzen. Der um das projizierte Bild zusätzlich projizierte helle Rahmen bietet insbesondere die Möglichkeiten, bei einer extremen Auslenkung des Spiegelelements 10 kurz vor einer Änderung der Drehrichtung (Umkehrpunkt) die aktuelle Stellung des Spiegelelements 10 genau zu detektieren. Dies ermöglicht eine Verbesserung eines Zusammenwirkens der zum Verstellen des Spiegelelements 10 verwendeten Komponenten des Antriebs. Zusätzlich ist auf diese Weise eine Synchronisation der Verstellbewegung des Spiegelelements 10 und der Lichtstrahlmodulation möglich.

Bei einem Projektor ist eine hohe Lichtintensität des einfallenden Lichtstrahls 28 für einen guten Kontrast und eine gute Wahrnehmbarkeit des projizierten Bildes vorteilhaft. Allerdings ist die Verwendung einer leistungsstarken Lichtquelle, beispielsweise eines Lasers, mit einem großen Verletzungsrisiko bei einen Einfallen des abgelenkten Lichtstrahls 30 in ein Auge verbunden. Das Verletzungsrisiko bei einem derartigen Unfall ist jedoch signifikant reduzierbar, indem technisch sichergestellt wird, dass bei einem erkannten Stillstand des Spiegelelements 10 die Lichtquelle sofort deaktiviert wird. Mittels des in den vorhergehenden Absätzen beschriebenen Verfahrens ist es möglich, den Betriebszustand des Spiegelelements 10 permanent zu überwachen und bei Erkennen eines Stillstands des Spiegelelements 10 ein Signal zum Abschalten der Lichtquelle auszugeben. Als Alternative zu einem Deaktivieren der Lichtquelle kann der abgelenkte Lichtstrahl 30 auch automatisch auf die Blende 42 gerichtet werden, sofern eine Bewegung des Spiegelelements 10 nicht erkannt wird, obwohl die Lichtquelle eingeschaltet ist. Dadurch kann verhindert werden, dass der abgelenkte Lichtstrahl 30 einem Betrachter ins Auge fällt.

## Patentansprüche

1. Mikromechanisches Bauteil mit:
einem Lichtfenster (12) eines Gehäuses des mikromechanischen Bauteils;
einem Spiegelelement (10), welches gegenüber dem Lichtfenster (12) aus einer ersten Stellung um mindestens eine Drehachse (14,16) in mindestens eine zweite Stellung verstellbar ist;
einem optischen Sensor (34a,34b) mit einer Detektionsfläche, welcher dazu ausgelegt ist, eine Lichtintensität und/oder eine Auftreffposition eines auftreffenden Lichtstrahls auf der Detektionsfläche zu ermitteln und ein entsprechendes Sensorsignal (A, B) bereitzustellen, wobei das Lichtfenster (12), das Spiegelelement (10) in der ersten Stellung und die Detektionsfläche so zueinander angeordnet sind, dass ein von dem Spiegelelement (10) abgelenkter und auf das Lichtfenster (12) auftreffender Lichtstrahl (30) teilweise durch das Lichtfenster (12) transmittiert und teilweise in das Innere des mikromechanischen Bauteils zurück reflektiert wird und der an dem Lichtfenster (12) reflektierter Anteil (32) des mittels des Spiegelelements (10) auf das Lichtfenster (12) abgelenkten Lichtstrahls (30) zumindest teilweise auf die Detektionsfläche trifft; und
einer Auswerteeinrichtung, welche dazu ausgelegt ist, unter Berücksichtigung des von dem optischen Sensor (34a,34b) bereitgestellten Sensorsignals (A, B) eine Information bezüglich einer aktuellen Stellung des Spiegelelements (10) gegenüber dem Lichtfenster (12) und/oder bezüglich einer aktuellen Intensität des abgelenkten Lichtstrahls (30) festzulegen, **dadurch gekennzeichnet, dass** die Auswerteeinrichtung zusätzlich dazu ausgelegt ist, anhand des zeitlichen Verlaufs des Sensorsignals einen Stillstand des Spiegelelements (10) zu erkennen, und, sofern ein Stillstand des Spiegelelements (10) für die vorgegebene Zeitdauer erkannt wird, ein Abschaltsignal an eine den abgelenkten Lichtstrahl (30) emittierende Lichtquelle auszugeben oder sofern ein Stillstand des Spiegelelements (10) für eine vorgegebene Zeitdauer erkannt wird, das Spiegelelement (10) mittels mindestens einer Feder (26) so zu verstellen, dass der abgelenkte Lichtstrahl (30) auf eine an einem Lichtfenster (12) angeordnete Blende (42) des mikromechanischen Bauteils richtbar ist.

2. Mikromechanisches Bauteil nach Anspruch 1, wobei das mikromechanische Bauteil eine Steuer- und Antriebeinrichtung (18, 20,22) umfasst, welche dazu ausgelegt ist, das Spiegelelement (10) für ein Abrastern einer Projektionsfläche mittels des durch das Lichtfenster (12) transmittierten Anteils des abgelenkten Lichtstrahls (30) um zwei Drehachsen (14,16) zu verstellen, wobei die Auswerteeinrichtung zusätzlich dazu ausgelegt ist, anhand eines zeitlichen Verlaufs des Sensorsignals einen Stillstand des Spiegelelements (10) zu erkennen, und, sofern ein Stillstand des Spiegelelements (10) für eine vorgegebene Zeitdauer erkannt wird, ein Lichtstrahl-Abblocksignal an die Steuer- und Antriebeinrichtung (18,20, 22) auszugeben, und wobei die Steuer- und Antriebeinrichtung (18,20, 22) zusätzlich dazu ausgelegt ist, bei einem Empfang des Lichtstrahl-Abblocksignals das Spiegelelement (10) so zu verstellen, dass der abgelenkte Lichtstrahl (30) auf eine an dem Lichtfenster (12) angeordnete Blende (42) des mikromechanischen Bauteils gerichtet wird.

3. Mikromechanisches Bauteil nach Anspruch 1 oder 2, wobei das Spiegelelement (10) an einem Chip (24) aufgehängt ist und der optische Sensor (34a,34b) auf dem Chip (24) angeordnet ist.

4. Verfahren zum Betreiben eines mikromechanischen Bauteils mit einem Lichtfenster (12) eines Gehäuses des mikromechanischen Bauteils und einem Spiegelelement (10), welches gegenüber dem Lichtfenster (12) aus einer ersten Stellung um mindestens eine Drehachse (14,16) in mindestens eine zweite Stellung verstellbar ist, wobei ein von dem Spiegelelement (10) abgelenkter und auf das Lichtfenster (12) auftreffender Lichtstrahl (30) teilweise durch das Lichtfenster (12) transmittiert und teilweise in das Innere des mikromechanischen Bauteils zurück reflektiert wird mit den Schritten:
Ermitteln einer Lichtintensität und/oder einer Auftreffposition eines Lichtstrahls, welcher auf einer Detektionsfläche auftrifft, welche so gegenüber dem Lichtfenster (12) und dem Spiegelelement (12) in der ersten Stellung angeordnet ist, dass der an dem Lichtfenster (12) reflektierter Anteil (32) des mittels des Spiegelelements (10) auf das Lichtfenster (12) abgelenkten Lichtstrahls (30) zumindest teilweise auf die Detektionsfläche trifft; und
Festlegen einer Information bezüglich einer aktuellen Stellung des Spiegelelements (10) gegenüber dem Lichtfenster (12) und/oder bezüglich einer aktuellen Intensität des abgelenkten Lichtstrahls (30) unter Berücksichtigung der ermittelten Lichtintensität und/oder der ermittelten Auftreffposition, **dadurch gekennzeichnet, dass** ein zeitlicher Verlauf der ermittelten Lichtintensität auf der Detektionsfläche auf einen möglichen Stillstand des Spiegelelements (10) untersucht wird, und, sofern ein Stillstand des Spiegelelements (10) für eine vorgegebene Zeitdauer erkannt wird, das Spiegelelement (10) mittels mindestens einer Feder (26) so verstellt wird, dass der abgelenkte
Lichtstrahl (30) auf eine an dem Lichtfenster (12) angeordnete Blende (42) des mikromechanischen Bauteils gerichtet wird oder wobei der zeitliche Verlauf der ermittelten Lichtintensität auf der Detektionsfläche auf einen möglichen Stillstand des Spiegelelements (10) untersucht wird, und, sofern ein Stillstand des Spiegelelements (10) für die vorgegebene Zeitdauer erkannt wird, ein Abschaltsignal an mindestens eine den abgelenkten Lichtstrahl (30) emittierende Lichtquelle ausgegeben wird.

5. Verfahren nach Anspruch 4, wobei ein vorgegebenes Bild auf eine Projektionsfläche projiziert wird, indem das Spiegelelement (10) um zwei Drehachsen (14,16) so verstellt wird, dass die Projektionsfläche mittels des durch das Lichtfenster (12) transmittierten Anteils des abgelenkten Lichtstrahls (30) zumindest teilweise abgerastert wird, und wobei während des Abrasterns der Projektionsfläche mindestens einmal die aktuellen Stellung des Spiegelelements (10) ermittelt und mit einer vorgegebenen Soll-Stellung des Spiegelelements (10) verglichen wird.

6. Verfahren nach Anspruch 5, wobei das vorgegebenes Bild auf die Projektionsfläche projiziert wird, indem das Spiegelelement (10) um zwei Drehachsen (14,16) so verstellt wird, dass die Projektionsfläche mittels des durch das Lichtfenster (12) transmittierten Anteils des abgelenkten Lichtstrahls (30) zumindest teilweise abgerastert wird, und wobei für eine nicht ausgeleuchtete Teilfläche der Projektionsfläche das Spiegelelement (10) so verstellt wird, dass der abgelenkte Lichtstrahl (30) auf die Blende (42) des mikromechanischen Bauteils gerichtet wird.

7. Verfahren nach einem der Ansprüche 4 bis 6, wobei mindestens zwei Lichtquellen nacheinander aktiviert werden, und nach einem Aktivieren einer der mindestens zwei Lichtquellen die aktuelle Intensität des abgelenkten Lichtstrahls (30) ermittelt wird, und unter Berücksichtigung der ermittelten aktuellen Intensität ein Helligkeitssteuersignal an die zuletzt aktivierte Lichtquelle ausgegeben wird.

8. Verfahren nach einem der Ansprüche 5 bis 7, wobei vor der Projektion des vorgegebenen Bilds die Projektionsfläche über ein Verstellen des Spiegelelements (10) um mindestens eine der beiden Drehachsen (14,16) zumindest teilweise abgerastert wird, wobei während des zumindest teilweisen Abrasterns der Projektionsfläche sichergestellt wird, dass ein von der mindestens einen emittierenden Lichtquelle emittierte Lichtstrahl (28) nicht auf die Detektionsfläche trifft, so dass über das Ermitteln der Lichtintensität auf der Detektionsfläche zumindest eine Teil-Lichtintensität auf der Projektionsfläche festgelegt wird.

## Claims

1. Micromechanical component comprising:
a light window (12) of a housing of the micromechanical component;
a mirror element (10), which is adjustable relative to the light window (12) from a first position about at least one rotation axis (14, 16) into at least one second position;
an optical sensor (34a, 34b) having a detection surface, said optical sensor being designed to determine a light intensity and/or an impingement position of an impinging light beam on the detection surface and to provide a corresponding sensor signal (A, B),
wherein the light window (12), the mirror element (10) in the first position and the detection surface are arranged with respect to one another such that a light beam (30) which is deflected by the mirror element (10) and impinges on the light window (12) is partly transmitted through the light window (12) and partly reflected back into the interior of the micromechanical component, and the portion (32), reflected at the light window (12) of the light beam (30) deflected onto the light window (12) by means of the mirror element (10) at least partly impinges on the detection surface; and
an evaluation device designed to define, taking account of the sensor signal (A, B) provided by the optical sensor (34a, 34b), information regarding a current position of the mirror element (10) relative to the light window (12) and/or regarding a current intensity of the deflected light beam (30), **characterized in that** the evaluation device is additionally designed to identify a standstill of the mirror element (10) on the basis of the temporal profile of the sensor signal and, if a standstill of the mirror element (10) is identified for the predefined time duration, to output a switch-off signal to a light source emitting the deflected light beam (30) or, if a standstill of the mirror element (10) is identified for a predefined time duration, to adjust the mirror element (10) by means of at least one spring (26) such that the deflected light beam (30) is directable onto a diaphragm (42) of the micromechanical component, said diaphragm being arranged at a light window (12).

2. Micromechanical component according to Claim 1, wherein the micromechanical component comprises a control and drive device (18, 20, 22) designed to adjust the mirror element (10) for a scanning of a projection surface by means of that portion of the deflected light beam (30) which is transmitted through the light window (12) about two rotation axes (14, 16), wherein the evaluation device is additionally designed to identify a standstill of the mirror element (10) on the basis of a temporal profile of the sensor signal and, if a standstill of the mirror element (10) is identified for a predefined time duration, to output a light beam blocking signal to the control and drive device (18, 20, 22), and wherein the control and drive device (18, 20, 22) is additionally designed to adjust the mirror element (10) upon reception of the light beam blocking signal such that the deflected light beam (30) is directed onto a diaphragm (42) of the micromechanical component, said diaphragm being arranged at the light window (12).

3. Micromechanical component according to Claim 1 or 2, wherein the mirror element (10) is suspended from a chip (24), and the optical sensor (34a, 34b) is arranged on the chip (24).

4. Method for operating a micromechanical component comprising a light window (12) of a housing of the micromechanical component and a mirror element (10), which is adjustable relative to the light window (12) from a first position about at least one rotation axis (14, 16) into at least one second position, wherein a light beam (30) which is deflected by the mirror element (10) and impinges on the light window (12) is partly transmitted through the light window (12) and partly reflected back into the interior of the micromechanical component, comprising the following steps:
determining a light intensity and/or an impingement position of a light beam which impinges on a detection surface arranged relative to the light window (12) and the mirror element (10) in the first position such that the portion (32), reflected at the light window (12), of the light beam (30) deflected onto the light window (12) by means of the mirror element (10) at least partly impinges on the detection surface; and
defining information regarding a current position of the mirror element (10) relative to the light window (12) and/or regarding a current intensity of the deflected light beam (30) taking account of the determined light intensity and/or the determined impingement position, **characterized in that** a temporal profile of the determined light intensity on the detection surface is examined for a possible standstill of the mirror element (10) and, if a standstill of the mirror element (10) is identified for a predefined time duration, the mirror element (10) is adjusted by means of at least one spring (26) such that the deflected light beam (30) is directed onto a diaphragm (42) of the micromechanical component, said diaphragm being arranged at the light window (12), or wherein the temporal profile of the determined light intensity on the detection surface is examined for a possible standstill of the mirror element (10) and, if a standstill of the mirror element (10) is identified for the predefined time duration, a switch-off signal is output to at least one light source emitting the deflected light beam (30).

5. Method according to Claim 4, wherein a predefined image is projected onto a projection surface by the mirror element (10) being adjusted about two rotation axes (14, 16) such that the projection surface is at least partly scanned by means of that portion of the deflected light beam (30) which is transmitted through the light window (12), and wherein during the scanning of the projection surface at least once the current position of the mirror element (10) is determined and compared with a predefined setpoint position of the mirror element (10) .

6. Method according to Claim 5, wherein the predefined image is projected onto the projection surface by the mirror element (10) being adjusted about two rotation axes (14, 16) such that the projection surface is at least partly scanned by means of that portion of the deflected light beam (30) which is transmitted through the light window (12), and wherein for a non-illuminated partial surface of the projection surface the mirror element (10) is adjusted such that the deflected light beam (30) is directed onto the diaphragm (42) of the micromechanical component.

7. Method according to any of Claims 4 to 6, wherein at least two light sources are activated successively, and after an activation of one of the at least two light sources the current intensity of the deflected light beam (30) is determined and, taking account of the current intensity determined, a brightness control signal is output to the light source that was activated last.

8. Method according to any of Claims 5 to 7, wherein, before the projection of the predefined image, the projection surface is at least partly scanned by means of the mirror element (10) being adjusted about at least one of the two rotation axes (14, 16), wherein during the at least partial scanning of the projection surface it is ensured that a light beam (28) emitted by the at least one emitting light source does not impinge on the detection surface, such that at least one partial light intensity on the projection surface is defined by way of determining the light intensity on the detection surface.

## Revendications

1. Composant micromécanique, comportant :
une fenêtre de lumière (12) d'un boîtier du composant micromécanique ;
un élément formant miroir (10) qui peut être déplacé par rapport à la fenêtre de lumière (12) depuis une première position, en tournant autour d'un axe de rotation (14, 16), vers au moins une deuxième position ;
un capteur optique (34a, 34b) comportant une surface de détection, qui est configurée de manière à déterminer une intensité lumineuse et/ou une position d'incidence d'un faisceau lumineux incident sur la surface de détection et à fournir un signal de capteur correspondant (A, B),
dans lequel la fenêtre de lumière (12), l'élément formant miroir (10) à la première position et la surface de détection sont disposés les uns par rapport aux autres de manière à ce qu'un faisceau lumineux (30) dévié par l'élément formant miroir (10) et incident sur la fenêtre de lumière (12) soit partiellement transmis à travers la fenêtre de lumière (12) et partiellement rétroréfléchi à l'intérieur du composant micromécanique et à ce que la partie (32), réfléchie par la fenêtre de lumière (12), du faisceau lumineux (30) dévié au moyen de l'élément formant miroir (10) vers la fenêtre de lumière (12), soit au moins partiellement incidente sur la surface de détection ; et
un dispositif d'évaluation, qui est conçu pour définir, en tenant compte du signal de capteur (A, B) fourni par le capteur optique (34a, 34b), une information concernant une position actuelle de l'élément formant miroir (10) par rapport à la fenêtre de lumière (12) et/ou par rapport à une intensité actuelle du faisceau lumineux dévié (30), **caractérisé en ce que** le dispositif d'évaluation est en outre conçu pour détecter un arrêt de l'élément formant miroir (10) sur la base de l'évolution temporelle du signal de capteur et, lorsqu'un arrêt de l'élément formant miroir (10) est détecté pendant l'intervalle de temps prédéterminé, pour délivrer un signal de désactivation à une source lumineuse émettant le faisceau lumineux dévié (30) et, lorsqu'un arrêt de l'élément formant miroir (10) est détecté pendant un intervalle de temps prédéterminé, pour déplacer l'élément formant miroir (10) au moyen d'au moins un ressort (26) de manière à ce que le faisceau lumineux dévié (30) puisse être dirigé vers un diaphragme (42) du composant micromécanique, disposé sur une fenêtre lumineuse (12).

2. Composant micromécanique selon la revendication 1, dans lequel le composant micromécanique comprend un dispositif de commande et d'entraînement (18, 20, 22) qui est conçu pour déplacer l'élément formant miroir (10) afin d'effectuer un balayage d'une surface de projection au moyen de la partie, transmise à travers la fenêtre lumineuse (12), du faisceau lumineux dévié (30), autour de deux axes de rotation (14, 16), dans lequel le dispositif d'évaluation est en outre conçu pour détecter un arrêt de l'élément formant miroir (10) sur la base d'une évolution temporelle du signal de capteur et, lorsqu'un arrêt de l'élément formant miroir (10) est détecté pendant un intervalle de temps prédéterminé, pour délivrer un signal d'occultation de faisceau lumineux au dispositif de commande et d'entrainement (18, 20, 22), et dans lequel le dispositif de commande et d'entraînement (18, 20, 22) est en outre conçu, lors de la réception du signal d'occultation de faisceau lumineux, pour déplacer l'élément formant miroir (10) de manière à ce que le faisceau lumineux dévié (30) soit dirigé vers un diaphragme (42) du composant micromécanique, disposé sur la fenêtre lumineuse (12).

3. Composant micromécanique selon la revendication 1 ou 2, dans lequel l'élément formant miroir (10) est suspendu à une puce (24) et le capteur optique (34a, 34b) est disposé sur la puce (24).

4. Procédé de mise en fonctionnement d'un composant micromécanique comportant une fenêtre lumineuse (12) d'un boîtier du composant micromécanique et un élément formant miroir (10), qui peut être déplacé par rapport à la fenêtre lumineuse (12), depuis une première position, en tournant autour d'un axe de rotation (14, 16), vers au moins une deuxième position, dans lequel un faisceau lumineux (30) dévié par l'élément formant miroir (10) et incident sur la fenêtre lumineuse (12) est partiellement transmis à travers la fenêtre lumineuse (12) et est partiellement rétroréfléchi à l'intérieur du composant micromécanique, comportant les étapes consistant à :
déterminer une intensité lumineuse et/ou une position d'incidence d'un faisceau lumineux, qui est incident sur une surface de détection, laquelle surface de détection est disposée par rapport à la fenêtre lumineuse (12) et à l'élément formant miroir (10) à sa première position de manière à ce que la partie (32), réfléchie par la fenêtre lumineuse (12), du faisceau lumineux (30) dévié au moyen de l'élément formant miroir (10) vers la fenêtre lumineuse (12), soit au moins partiellement incidente sur la surface de détection ; et
définir une information concernant une position actuelle de l'élément formant miroir (10) par rapport à la fenêtre lumineuse (12) et/ou par rapport à une intensité actuelle du faisceau lumineux dévié (30) en tenant compte de l'intensité lumineuse déterminée et/ou de la position d'incidence déterminée, **caractérisé en ce qu'**une évolution temporelle de l'intensité lumineuse déterminée sur la surface de détection permet d'examiner l'éventuel arrêt de l'élément formant miroir (10) et, lorsqu'un arrêt de l'élément formant miroir (10) est détecté pendant un intervalle de temps prédéterminé, l'élément formant miroir (10) est déplacé au moyen d'au moins un ressort (26) de manière à ce que le faisceau lumineux dévié (30) soit dirigé vers un diaphragme (42) du composant micromécanique, disposé sur la fenêtre lumineuse (12), ou dans lequel l'évolution temporelle de l'intensité lumineuse sur la surface de détection est examinée pour déterminer un éventuel arrêt de l'élément formant miroir (10) et, lorsqu'un arrêt de l'élément formant miroir (10) est détecté pendant l'intervalle de temps prédéterminé, un signal de désactivation est délivré à au moins une source lumineuse émettant le faisceau lumineux dévié (30) .

5. Procédé selon la revendication 4, dans lequel une image prédéterminée est projetée sur une surface de projection en déplaçant l'élément formant miroir (10) autour de deux axes de rotation (14, 16) de manière à ce que la surface de projection soit au moins partiellement balayée au moyen de la partie, transmise à travers la fenêtre lumineuse (12), du faisceau lumineux dévié (30), et dans lequel, pendant le balayage de la surface de projection, la position actuelle de l'élément formant miroir (10) est déterminée au moins une fois et est comparée à une position nominale prédéterminée de l'élément formant miroir (10).

6. Procédé selon la revendication 5, dans lequel l'image prédéterminée est projetée sur la surface de projection en déplaçant l'élément formant miroir (10) autour de deux axes de rotation (14, 16) de manière à ce que la surface de projection soit balayée au moins partiellement au moyen de la partie, transmise à travers la fenêtre lumineuse (12), du faisceau lumineux dévié (30), et dans lequel, pour une partie de surface non éclairée de la surface de projection, l'élément formant miroir (10) est déplacé de manière à ce que le faisceau lumineux dévié (30) soit dirigé vers le diaphragme (42) du composant micromécanique.

7. Procédé selon l'une des revendications 4 à 6, dans lequel au moins deux sources lumineuses sont activées l'une après l'autre et, après une activation de l'une des au moins deux sources lumineuses, l'intensité actuelle du faisceau lumineux dévié (30) est déterminée et un signal de commande de luminosité est délivré à la source lumineuse activée en dernier en tenant compte de l'intensité actuelle déterminée.

8. Procédé selon l'une des revendications 5 à 7, dans lequel, avant la projection de l'image prédéterminée, la surface de projection est balayée au moins partiellement par l'intermédiaire d'un déplacement de l'élément formant miroir (10) autour d'au moins l'un des deux axes de rotation (14, 16), dans lequel, pendant ledit balayage au moins partiel de la surface de projection, il est vérifié qu'un faisceau lumineux (28) émis par ladite au moins une source lumineuse émettrice n'est pas incident sur la surface de détection de manière à pouvoir déterminer au moins une intensité lumineuse partielle sur la surface de projection au moyen de la détermination de l'intensité lumineuse sur la surface de détection.
